# EUROPEAN PATENT SPECIFICATION

(11) **EP 1 274 956 B1**
(45) Date of publication and mention of the grant of the patent: **22.06.2005**
(21) Application number: 01927953.8
(22) Date of filing: 09.04.2001
(51) Int. Cl.: F16L 59/14, F24F 13/02

(54) **AIR-CONDITIONING DUCT SYSTEM**
ROHRLEITUNGSSYSTEM EINER KLIMAANLAGE
SYSTEME DE GAINES DE CLIMATISATION

(30) Priority: 12.04.2000 FI 20000875
(43) Date of publication of application: 15.01.2003
(73) Proprietor: Fläkt Woods AB, 55184 Jönköping (SE)
(72) Inventor: HIDEN, Esko, FIN-20540 Turku (FI); SALMIO, Erkki, FIN-20660 Littoinen (FI)
(74) Representative: Valkeiskangas, Tapio
(86) International application number: PCT/FI2001/000349
(87) International publication number: WO 2001/079744

(56) References cited:
- DE-C1- 4 212 505
- FI-B- 102 853
- GB-A- 962 420
- US-A- 3 563 572
- US-A- 4 219 225

## Description

### BACKGROUND OF THE INVENTION

The invention relates to an air-conditioning duct system comprising ducts which comprise a first inner casing and a first outer casing and a first insulator between them, and connecting pieces joining the ducts, the connecting pieces comprising a second inner casing and a second outer casing and a second insulator between them.

Thermal conductivity of air is considerably lower than that of an insulating material, which means that air is a better thermal insulator than any insulating material.

An air-conditioning duct system according to the preamble of claim 1 is known from the Finnish published specification No. 40760 and GB-A-962,420, respectively.

This Finnish published specification discloses an air-conditioning duct system comprising a duct which is made up of two separate, thin-walled sheet-iron pipes arranged coaxially between two connecting parts, such as angled ducts, pipe tees or the like, in other words, an outer pipe and an inner pipe having only an insulating air space between them. The outer pipe and the inner pipe are attached to each other only by means of the external insulation surrounding the connecting parts in such a manner that during installation, the inner pipe is pushed inside said insulation and the outer pipe on top of it.

A problem with the arrangement described above is that it is difficult to install the ducts so that they remain at a certain distance from each other. This applies especially to long ducts.

### BRIEF DESCRIPTION OF THE INVENTION

It is thus an object of the invention to develop an air-conditioning duct system, in which the above problem is solved.

The object of the invention is achieved by an air-conditioning duct system which is characterized in that the first insulator in the ducts is an insulating material and that the second insulator in the connecting piece is insulating air.

Preferred embodiments of the invention are set forth in the dependent claims.

The air duct system of the invention, which comprises ducts and connecting parts (curves, tees, transforming parts, etc.), thus has an insulating solution in which there is an insulating material between the outer casing and the inner casing of the duct, but only air is used as insulation between the outer casing and the inner casing of the connecting parts.

The solution of the invention provides the advantage that the outer casing and the inner casing of the duct remain better at a specific distance from each other, since an insulating material is used in the duct.

The solution of the invention provides the further advantage that the duct can be cut at any location, because the insulating material supports the outer casing and the inner casing everywhere.

The solution of the invention provides the yet further advantage that the insulating material prevents air from moving between the outer casing and the inner casing especially in a vertical duct, which might cause convection between the outer casing and the inner casing when air moves upwards. In the connecting parts, the uninsulated space is so limited that an actual air movement does not occur.

An identical sealing system, for instance sealing rings, is preferably used in the joints of the duct and connecting pieces in both the outer casing and the inner casing. A sealing on the inner casing and the outer casing makes the product tighter than when only one casing has a sealing, as is the case in the solution known from the Finnish published specification No. 40760. This type of ducts are generally used in transporting underheated air, in which case there is a danger that condensate is created on the outer surface of the outer duct, if the temperature difference and air humidity are favourable and cold air comes into contact with the outer casing. When both the outer casing and the inner casing has a sealing, the joint is sealed better and there is no danger of condensate.

The fastening of the sealing ring at the end of the connecting part can be made round, in which case the connecting part is easier to install inside the duct, since the ends of the outer casing and the inner casing are rounded.

Further, the solution of the invention provides the advantage that leaving the insulating material out of the connecting parts reduces the manufacturing costs.

### BRIEF DESCRIPTION OF THE FIGURES

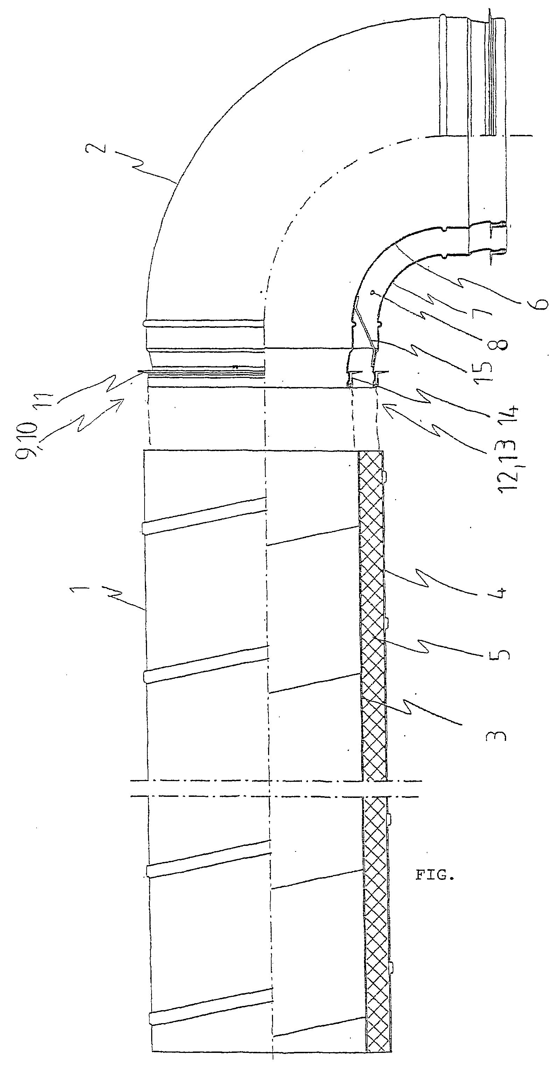

In the following the invention will be described in greater detail by means of preferred embodiments and with reference to the accompanying figure which shows a partial cross-section of a disassembled joint between the connecting part and the duct.

### DETAILED DESCRIPTION OF THE INVENTION

The figure shows a part of an air-conditioning duct system which comprises ducts 1 and connecting pieces 2 joining them. The figure shows a substantially straight duct 1 and a connecting piece 2 producing a 90° angle. The duct 1 can also have another shape. The duct 1 can be partly or completely curved, for instance. The duct 1 can have any shape in cross-section, it can be round, oval, oblong or a combination of the above-mentioned shapes.

The connecting piece 2 can be a curve, tee, transforming part, etc. The connecting part 2 can have any shape in cross-section, it can be round, oval, oblong or a combination of the above-mentioned shapes.

The duct 1 and the connecting piece 2 preferably have an at least partly same-sized and -shaped cross-section so as to allow an easy connection.

The duct 1 comprises a first inner casing 3 and a first outer casing 4. A first insulator 5 is located between the first inner casing 3 and the first outer casing 4. The first insulator 5 is mineral wool, for instance.

The connecting piece 2 comprises a second inner casing 6 and a second outer casing 7. A second insulator 8 is located between the second inner casing 6 and the second outer casing 7.

The first inner casing 3 and the first outer casing 4 of the duct 1 and the second inner casing 6 and the second outer casing 7 of the connecting piece 2 are for example, but not necessarily, made of steel iron.

In the solution of the invention, the first insulator 5 in the ducts 1 is an insulating material and the second insulator 8 in the connecting piece 2 is insulating air.

The second outer casing 7 of the connecting piece 2 preferably comprises first sealing elements 9 which are adapted to function together with the first outer casing 4 of the duct 1.

In the figure, the second outer casing 7 of the connecting piece 2 comprises a first joint end 10 which is adapted to be pushed partly into the duct 1. The first joint end is preferably at least partly rounded. The first sealing elements 9 are preferably formed so that they produce the rounding of the first joint end.

The first sealing elements 9 preferably comprise a first sealing ring 11.

The second inner casing 6 of the connecting piece 2 preferably comprises second sealing elements 12 which are adapted to function together with the first inner casing 3 of the duct 1.

In the figure, the second inner casing 6 of the connecting piece 2 comprises a second joint end 13 which is adapted to be pushed partly in the duct 1. The second joint end is preferably at least partly rounded. The second sealing elements 12 are preferably formed so that they produce the rounding of the second joint end.

The second sealing elements 12 preferably comprise a second sealing ring 14.

In the figure, the connecting piece 2 has elements 15 which are adapted to keep the second inner casing 6 and the second outer casing 7 at a distance from each other and to keep the second inner casing 6 and the second outer casing 7 attached to each other.

## Claims

1. An air-conditioning duct system comprising
ducts (1) which comprise a first inner casing (3) and a first outer casing (4) and a first insulator (5) between them, and
connecting pieces (2) joining the ducts (1), the connecting pieces comprising a second inner casing (6) and a second outer casing (7) and a second insulator (8) between them,
**characterized in that**
the first insulator (5) in the ducts (1) is an insulating material, and
the second insulator (8) in the connecting piece (2) is insulating air.

2. An air-conditioning duct system as claimed in claim 1, **characterized in that** the second outer casing (7) of the connecting piece (2) comprises first sealing elements (9) which are adapted to function together with the first outer casing (4) of the duct (1).

3. An air-conditioning duct system as claimed in claim 1, **characterized in that** the second outer casing (7) of the connecting piece (2) comprises a first joint end (10) which is adapted to be pushed partly into the duct (1) and that the first joint end (10) is rounded.

4. An air-conditioning duct system as claimed in claims 2 and 3, **characterized in that** the first sealing elements (9) produce the rounding of the first joint end (10).

5. An air-conditioning duct system as claimed in any one of claims 1 to 4, **characterized in that** the first sealing elements (9) comprise a first sealing ring (11).

6. An air-conditioning duct system as claimed in claim 1, **characterized in that** the second inner casing (6) of the connecting piece (2) comprises second sealing elements (12) which are adapted to function together with the first inner casing (3) of the duct (1).

7. An air-conditioning duct system as claimed in claim 1, **characterized in that** the second inner casing (6) of the connecting piece (2) comprises a second joint end (13) which is adapted to be pushed partly into the duct (1) and that the second joint end (13) is rounded.

8. An air-conditioning duct system as claimed in claims 6 and 7, **characterized in that** the second sealing elements (12) produce the rounding of the second joint end (13).

9. An air-conditioning duct system as claimed in any one of claims 6 to 8, **characterized in that** the second sealing elements (12) comprise a second sealing ring (14).

10. An air-conditioning duct system as claimed in any one of claims 1 to 9, **characterized in that** the duct (1) is a substantially straight duct.

## Patentansprüche

1. Rohrleitungssystem einer Klimaanlage mit:
Rohren (1), die einen ersten inneren Mantel (3) und einen ersten äußeren Mantel (4) und dazwischen eine erste Isolierung (5) aufweisen, und
Verbindungsstücke (2), die die Rohre (1) verbinden, wobei die Verbindungsstücke einen zweiten inneren Mantel (6) und einen zweiten äußeren Mantel (7) und dazwischen eine zweite Isolierung (8) aufweisen,
**dadurch gekennzeichnet, daß**
die erste Isolierung (5) in den Rohren ein isolierendes Material ist und
die zweite Isolierung (8) in dem Verbindungsstück (2) isolierende Luft ist.

2. Rohrleitungssystem einer Klimaanlage nach Anspruch 1, **dadurch gekennzeichnet, daß** der zweite äußere Mantel (7) des Verbindungsstücks (2) erste Dichtungselemente (9) aufweist, die geeignet sind, um mit dem ersten äußeren Mantel (4) des Rohrs (1) zusammen zu wirken.

3. Rohrleitungssystem einer Klimaanlage nach Anspruch 1, **dadurch gekennzeichnet, daß** der zweite äußere Mantel (7) des Verbindungsstücks (2) ein erstes Anschlußende (10) aufweist, das geeignet ist, um teilweise in das Rohr (1) hineingeschoben zu werden, und **dadurch**, daß das erste Anschlußende (10) gerundet ist.

4. Rohrleitungssystem einer Klimaanlage nach Anspruch 2 und 3, **dadurch gekennzeichnet, daß** die ersten Dichtungselemente (9) die Rundung des ersten Anschlußendes (10) erzeugen.

5. Rohrleitungssystem einer Klimaanlage nach einem der Ansprüche 1 bis 4, **dadurch gekennzeichnet, daß** die ersten Dichtungselemente (9) einen ersten Dichtungsring (11) aufweisen.

6. Rohrleitungssystem einer Klimaanlage nach Anspruch 1, **dadurch gekennzeichnet, daß** der zweite innere Mantel (6) des Verbindungsstücks (2) zweite Dichtungselemente (12) aufweist, die geeignet sind, um mit dem ersten inneren Mantel (3) des Rohrs (1) zusammen zu wirken.

7. Rohrleitungssystem einer Klimaanlage nach Anspruch 1, **dadurch gekennzeichnet, daß** der zweite innere Mantel (6) des Verbindungsstücks (2) ein zweites Anschlußende (13) aufweist, das geeignet ist, um teilweise in das Rohr (1) hineingeschoben zu werden, und **dadurch**, daß das zweite Anschlußende (13) gerundet ist.

8. Rohrleitungssystem einer Klimaanlage nach Anspruch 6 und 7, **dadurch gekennzeichnet, daß** die zweiten Dichtungselemente (12) die Rundung des zweiten Anschlußendes (13) erzeugen.

9. Rohrleitungssystem einer Klimaanlage nach einem der Ansprüche 6 bis 8, **dadurch gekennzeichnet, daß** die zweiten Dichtungselemente (12) einen zweiten Dichtungsring (14) aufweisen.

10. Rohrleitungssystem einer Klimaanlage nach einem der Ansprüche 1 bis 9, **dadurch gekennzeichnet, daß** das Rohr (1) ein im wesentlichen gerades Rohr ist.

## Revendications

1. Système de conduits de conditionnement d'air de climatisation, comprenant
des conduits (1) qui comprennent une première gaine intérieure (3) et une première gaine extérieure (4) et un premier isolateur (5) disposé entre elles, et
des éléments de raccordement (2) réunissant des conduits (1), les éléments de raccordement comprenant une seconde gaine intérieure (6) et une seconde gaine extérieure (7) et un second isolateur (8) disposé entre elles,
**caractérisé en ce que**
le premier isolateur (5) situé dans les conduits (1) est un matériau isolant, et
le second isolateur (8) dans l'élément de raccordement (2) est de l'air isolant.

2. Système de conduits de climatisation selon la revendication 1, **caractérisé en ce que** la seconde gaine extérieure (7) de l'élément de raccordement (2) comprend des premiers éléments d'étanchéité (9), qui sont adaptés pour fonctionner conjointement avec la première gaine extérieure (4) du conduit (1).

3. Système de conduits de climatisation selon la revendication 1, **caractérisé en ce que** la seconde gaine extérieure (7) de l'élément de raccordement (2) comprend une première extrémité de jonction (10), qui est adaptée pour être repoussée en partie dans le conduit (1) et que la première extrémité de jonction (10) est arrondie.

4. Système de conduits de climatisation selon les revendications 2 et 3, **caractérisé en ce que** les premiers éléments d'étanchéité (9) produisent l'arrondi de la première extrémité de jonction (10).

5. Système de conduits de climatisation selon l'une quelconque des revendications 1 à 4, **caractérisé en ce que** les premiers éléments d'étanchéité (9) comprennent une première bague d'étanchéité (11).

6. Système de conduits de climatisation selon la revendication 1, **caractérisé en ce que** la seconde gaine intérieure (6) de l'élément de raccordement (2) comprend des seconds éléments d'étanchéité (12), qui sont adaptés pour fonctionner conjointement avec la première gaine intérieure (3) du conduit (1).

7. Système de conduits de climatisation selon la revendication 1, **caractérisé en ce que** le second conduit intérieur (6) de l'élément de raccordement (2) comprend une seconde extrémité de jonction (13) qui est adaptée de manière à être repoussée en partie dans le conduit (1) et que la seconde extrémité de jonction (13) est arrondie.

8. Système de conduits de climatisation selon les revendications 6 et 7, **caractérisé en ce que** les seconds éléments d'étanchéité (12) produisent l'arrondi de la seconde extrémité de jonction (13).

9. Système de conduits de climatisation selon l'une quelconque des revendications 6 à 8, **caractérisé en ce que** les seconds éléments d'étanchéité (12) comprennent une seconde bague d'étanchéité (14).

10. Système de conduits de climatisation selon l'une quelconque des revendications 1 à 9, **caractérisé en ce que** le conduit (1) est un conduit sensiblement rectiligne.
